# EUROPÄISCHE PATENTSCHRIFT

(11) **EP 4 620 281 B1**
(45) Veröffentlichungstag und Bekanntmachung des Hinweises auf die Patenterteilung: **28.10.2026**
(21) Anmeldenummer: 25155282.4
(22) Anmeldetag: 31.01.2025
(51) Int. Cl.: A01B 73/04, A01D 41/14, A01D 45/02

(54) **VORSATZGERÄT FÜR EINE LANDWIRTSCHAFTLICHE ARBEITSMASCHINE**
ATTACHMENT DEVICE FOR AN AGRICULTURAL WORKING MACHINE
APPAREIL ADAPTABLE POUR UNE MACHINE AGRICOLE

(30) Priorität: 19.03.2024 DE 102024107755
(43) Veröffentlichungstag der Anmeldung: 24.09.2025
(73) Patentinhaber: CLAAS Selbstfahrende Erntemaschinen GmbH, 33428 Harsewinkel (DE)
(72) Erfinder: Brand, Andreas, 33428 Marienfeld (DE); Niermann, Martin, 33428 Harsewinkel (DE)
(74) Vertreter: Budach, Steffen

(56) Entgegenhaltungen:
- EP-A1- 1 142 467
- DE-U1- 8 535 733
- US-A1- 2011 030 326

## Beschreibung

Die Erfindung betrifft ein Vorsatzgerät für eine landwirtschaftliche Arbeitsmaschine gemäß dem Oberbegriff des Anspruchs 1.

Das Vorsatzgerät ist in mehrere Segmente unterteilt, wobei die Segmente zumindest ein Mittensegment und ein Seitensegment umfassen. Die Segmente sind schwenkbeweglich und verklappbar mit einer Schwenklagerung miteinander verbunden. Die Schwenklagerung bildet eine Schwenkachse aus, um die das Seitensegment verschwenkbeweglich ist. Die Verklappung soll der Reduzierung der Transportbreite dienen. Dazu kann ein Verklappungswinkel von bis zu etwa 180° vorgesehen sein. Das Vorsatzgerät kann beispielsweise als ein sogenannter Maispflücker ausgebildet sein, wobei die Segmente jeweils mit mehreren Pflückeinheiten versehen sind. Zum Antreiben der Pflückeinheiten umfasst das Vorsatzgerät einen Antriebsstrang der Antriebsmittel, insbesondere Wellen, umfasst, die sich von dem Mittensegment hin zu dem Seitensegment erstrecken. Um eine Verklappung der Segmente zueinander zuzulassen, können die Antriebsmittel beispielsweise mittels einer Kupplung verbunden sein, wobei im geklappten Zustand die Antriebsmittel entkoppelt bzw. getrennt sein können.

Derartige Vorsatzgeräte sind in vielfältiger Art bekannt. Die EP 1 142 467 A1 beschreibt ein Vorsatzgerät, welches entsprechend zueinander klappbare Segmente aufweist.

Besondere Herausforderungen gehen mit der Ausrichtung der Segmente zueinander einher. Aufgrund von Fertigungstoleranzen ist es erforderlich, dass bei einer Erstmontage die Position zumindest eines Segments, insbesondere des Seitensegment relativ zu dem Mittensegment, individuell ausgerichtet werden muss, um die Fertigungstoleranzen auszugleichen. Erst nachdem die Segmente passend zueinander ausgerichtet sind, erfolgt ein weiterer Montageschritt, welcher beispielsweise ein Bohren an Verbindungsstellen mit anschließendem formschlüssigen verbinden, beispielsweise ein Vernieten, an den Bohrlöchern vorsieht. Ein solcher Montageschritt gestaltet sich als sehr zeitaufwendig und erfordert eine hohe Präzision, da die Bohrlöcher die Position der Verbindungsstelle festlegen und keine Neupositionierung zulassen.

Es ist deshalb Aufgabe der Erfindung, die beschriebenen Nachteile des Standes der Technik zu vermeiden und insbesondere ein segmentiertes Vorsatzgerät zu schaffen, welches eine vereinfachte Montage und Ausrichtung der Segmente zueinander ermöglicht.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein Vorsatzgerät für eine landwirtschaftliche Arbeitsmaschine vorgeschlagen, umfassend ein Mittensegment mit einem Mittelrahmenteil und zumindest ein Seitensegment, mit einem Seitenrahmenteil, wobei das Seitensegment mit einer Schwenklagerung mit dem Mittensegment gekoppelt ist, wobei die Schwenklagerung eine Schwenkachse ausbildet, um die das Seitensegment relativ zu dem Mittensegment verschwenkbeweglich ist, wobei das Vorsatzgerät eine Schwenklagerhalterung umfasst, die dazu vorgesehen und eingerichtet ist das zumindest eine Seitensegment relativ zu dem Mittensegment auszurichten, wobei die Schwenklagerhaltung zwei Tragelemente umfasst, die mittels zumindest eines Reibelements in kraftübertragender Weise verbunden sind.

Die Erfindung hat viele Vorteile. Die Schwenklagerhalterung ermöglicht ein Ausrichten des Seitensegments relativ zu dem Schwenklager und die von dem Schwenklager ausgebildete Schwenkachse. Mithin ist auch die Position des Seitensegments zu dem Mittensegment einstellbar, sodass Fertigungstoleranzen durch das Ausrichten ausgeglichen werden können. Das Ausgleichen der Fertigungstoleranzen ist erforderlich, um eine fluchtende Verbindung zwischen etwaigen Antriebswellen und Gutflusselementen zu erreichen, die sich übergreifend zwischen den Segmenten erstrecken. Nach einem Ausrichten des Seitensegments bewirkt das Reibelement eine reibschlüssige Verbindung zwischen den Tragelementen der Schwenklagerhalterung. Die reibschlüssige Verbindung verhindert ein Verrutschen der Tragelemente relativ zueinander. Besonders vorteilhaft ist, dass keine zusätzlichen formschlüssigen Verbindungselemente nach einem Ausrichten des Seitensegments vorgesehen werden müssen. Ein zusätzlicher und zeitaufwendiger Montageschritt, der beispielsweise das Bohren von Stiftlöchern und ein anschließendes Vernieten vorsieht, ist nicht erforderlich. Das Verrutschen der Tragelemente wird ausschließlich durch einen Reibschluss zwischen den Tragelementen verhindert.

Eine vorteilhafte Weiterbildung sieht vor, dass das erste Tragelement eine erste Flanschfläche ausbildet und das zweite Tragelemente eine zweite Flanschfläche ausbildet. Die Flanschflächen können flächige Oberflächen aufweisen, die mit dem Reibelement zur Ausbildung einer reibschlüssigen Verbindung in Wirkverbindung stehen.

Eine weitere vorteilhafte Weiterbildung sieht vor, dass das erste Tragelement ortsfest an dem Seitenrahmenteil angeordnet ist und das zweite Tragelement an der Schwenklagerung angeordnet ist. Dadurch, dass die Tragelemente zueinander ausrichtbar sind, kann somit das Seitenrahmenteil relativ zu dem Mittelrahmenteil und somit das Seitensegment zu dem Mittensegment ausgerichtet werden.

Gemäß einer vorteilhaften Ausgestaltung kann die Schwenklagerung einen Bolzen umfassen, der ortsfest an dem Mittelrahmenteil angeordnet ist, wobei ein Lager, insbesondere Gelenklager, auf dem Bolzen angeordnet ist, welches den Bolzen mit dem zweiten Tragelement drehbeweglich koppelt.

Gemäß einer weiteren vorteilhaften Ausgestaltung kann das Reibelement eine flächige Platte sein, die zwischen der ersten und zweiten Flanschfläche angeordnet ist, wobei vorzugsweise das Reibelement aus verzinktem Stahl, Aluminium, Edelstahl oder gesintertem Metall besteht.

Um eine besonders belastbare Schwenklagerhalterung zu schaffen können mindestens zwei Reibelemente, vorzugsweise vier Reibelemente, zwischen der ersten und zweiten Flanschfläche sandwichartig angeordnet sein, wobei zumindest ein Reibelement mittels eines ersten Befestigungsmittels, insbesondere eines Bolzens, an der ersten Flanschfläche angeordnet ist und zumindest ein weiteres Reibelement mittels eines zweiten Befestigungsmittels, insbesondere eines Bolzens, an der zweiten Flanschfläche angeordnet ist.

Bevorzugt ist es, wenn die Tragelemente miteinander korrespondierende Verbindungsbereiche aufweisen, die dazu vorgesehen und eingerichtet sind, jeweils mittels mindestens eines Verbindungsmittels miteinander verbunden, insbesondere verschraubt, zu werden. Insbesondere die Ausgestaltung der Verbindungsmittel als Schraubelemente ermöglicht, dass das Seitensegment jederzeit erneut ausgerichtet werden kann. Die Verbindungsbereiche sind in ihrem Durchmesser größer als der Durchmesser der sich durch diese hindurch erstreckenden Verbindungsmittel ausgeführt, sodass im Losezustand der Verbindungsmittel die Tragelemente relativ zueinander beweglich sind. Im Festzustand der Verbindungsmittel können die Tragelemente mit den Reibelementen verspannt sein, um eine reibschlüssige Verbindung mit den Reibelementen herzustellen. Demgemäß wird ein Verrutschen der Tragelemente lediglich durch die reibschlüssige Verbindung verhindert.

Besonders bevorzugt ist es, wenn das erste Tragelement in seinen Verbindungsbereichen derart ausgebildet ist, insbesondere mittels Langlöcher, dass bei Vorliegen der Verbindungsmittel in einem Losezustand das erste Tragelement entlang einer ersten Bewegungsachse relativ zu dem zweiten Tragelement beweglich ist.

Weiterhin ist es besonders bevorzugt, wenn das zweite Tragelement in seinen Verbindungsbereichen derart ausgebildet ist, insbesondere mittels Langlöcher, dass bei Vorliegen der Verbindungsmittel in einem Losezustand das erste Tragelement entlang einer zweiten Bewegungsachse relativ zu dem zweiten Tragelement beweglich ist.

Vorzugsweise kann das Seitensegment von einer horizontal ausgerichteten Arbeitsstellung in eine Transportstellung verschwenkbeweglich sein.

Die vorliegende Erfindung wird nachstehend anhand eines in den Zeichnungen dargestellten Ausführungsbeispiels näher erläutert. Es zeigen:
- Figur 1: eine schematische Frontansicht eines segmentierten Vorsatzgeräts für eine landwirtschaftliche Arbeitsmaschine;
- Figur 2: perspektivisch und schematisch eine Schwenklagerung zur drehbeweglichen Anbindung zweier Segmente des Vorsatzgeräts gemäß Figur 1;
- Figur 3: zwei Flanschflächen einer Schwenklagerhalterung;
- Figur 4: eine Schwenklagerhalterung mit mehreren Reibelementen.

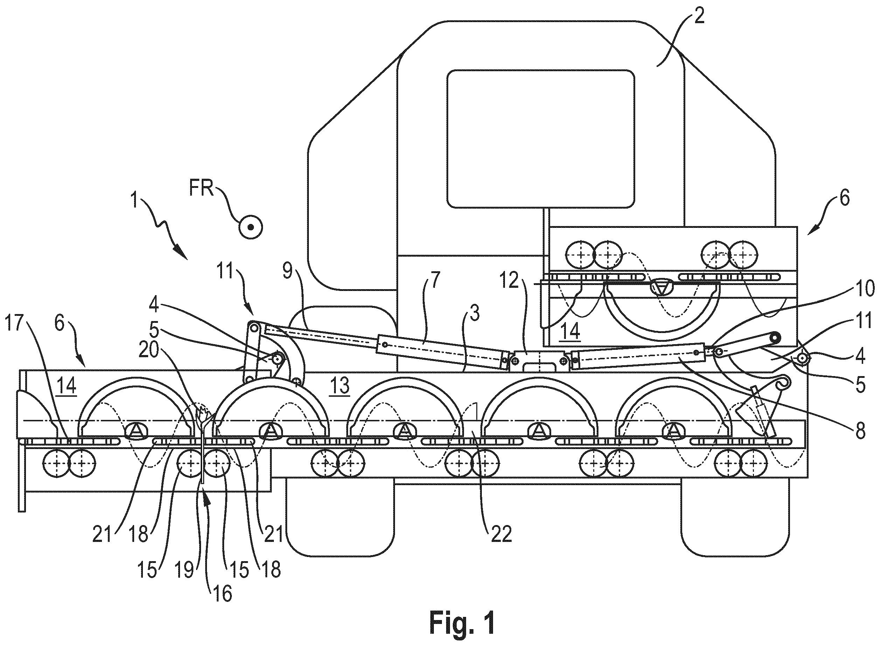

Fig. 1 zeigt schematisch eine Frontansicht eines Vorsatzgeräts 1 für eine landwirtschaftliche Arbeitsmaschine 2. Das Vorsatzgerät 1 ist hier und vorzugsweise als ein Maispflücker und die landwirtschaftliche Arbeitsmaschine 2 als ein selbstfahrender Mähdrescher ausgebildet. Das Vorsatzgerät 1 ist in seinem rückwärtigen Bereich in nicht näher dargestellter Weise an die landwirtschaftliche Arbeitsmaschine 2 adaptiert. Das Vorsatzgerät 1 unterteilt sich in ein direkt mit der Arbeitsmaschine 2 verbundenes Mittensegment 3, das in seinen Randbereichen in Fahrtrichtung FR weisende Schwenklagerungen 4 aufnimmt.

Die Schwenklagerungen 4 werden jeweils von einer noch näher zu erläuternden Schwenklagerhalterung 5 umgriffen, die anderenends drehfest mit einem verschwenkbaren Seitensegmenten 6 verbunden ist, wobei in Figur 1 das linke Seitensegment 6 in der bodennahen Arbeitsstellung und das rechte Seitensegment 6 in einer über dem Mittensegment 3 liegenden Transportstellung dargestellt ist. Zum Verschwenken der Seitensegmente 6 von der Arbeits- in die Transportstellung und umgekehrt sind dem nicht verschwenkbaren Mittensegmet 3 Hubzylinder 7, 8 gelenkig zugeordnet, deren Kolbenstangen 9, 10 über je einen Koppelmechanismus 11 das Mittensegmet 3 mit den jeweiligen Seitensegment 6 drehbeweglich verbinden, wobei abweichend von der dargestellten Ausführung die Kolbenstange 9, 10 auch direkt an dem jeweiligen Seitensegment 6 angeordnet sein kann. Eine Druckbeaufschlagung der Hubzylinder 7, 8 durch die nicht dargestellte Druckquelle der Arbeitsmaschine 2 führt je nach Bewegungsrichtung der jeweiligen Kolbenstange 9, 10 zum Anheben oder Absenken der Seitensegmente 6.

Aufgrund der Mehrteiligkeit des Vorsatzgeräts 1 untergliedert sich dessen Hauptrahmen 12 in einen Mittelrahmenteil 13 und diesem schwenkbeweglich zugeordnete Seitenrahmenteile 14. Die verschiedenen Rahmenteile 13, 14 des als Maispflücker ausgebildeten Vorsatzgerätes 1 nehmen untenseitig als paarweise zusammenarbeitende Pflückwalzen 15 ausgeführte Arbeitsorgane 16 auf. In an sich bekannter Weise sind jedem Pflückwalzenpaar 15, 16 obenseitig zwischen sich einen Pflückspalt 17 ausbildende Pflückplatten 18 zugeordnet, durch deren Pflückspalt 17 ein von den Pflückwalzen 15 erfasster Stängel 19 hindurchgezogen wird, wobei die Fruchtstände 20 an den Pflückplatten 18 abgestriffen und mittels Förderketten 21 in den rückwärtigen Bereich der Pflückwalzen 15 gefördert werden. Im dargestellten Ausführungsbeispiel ist dem Vorsatzgerät 1 im rückwärtigen Bereich der Pflückwalzen 15 eine Querförderschnecke 22 zugeordnet, die die von den Förderketten 21 in diesen Bereich transportierten Fruchtstände 20 mittig zusammenführt und in an sich bekannter Weise an die landwirtschaftliche Arbeitsmaschine 2 übergibt.

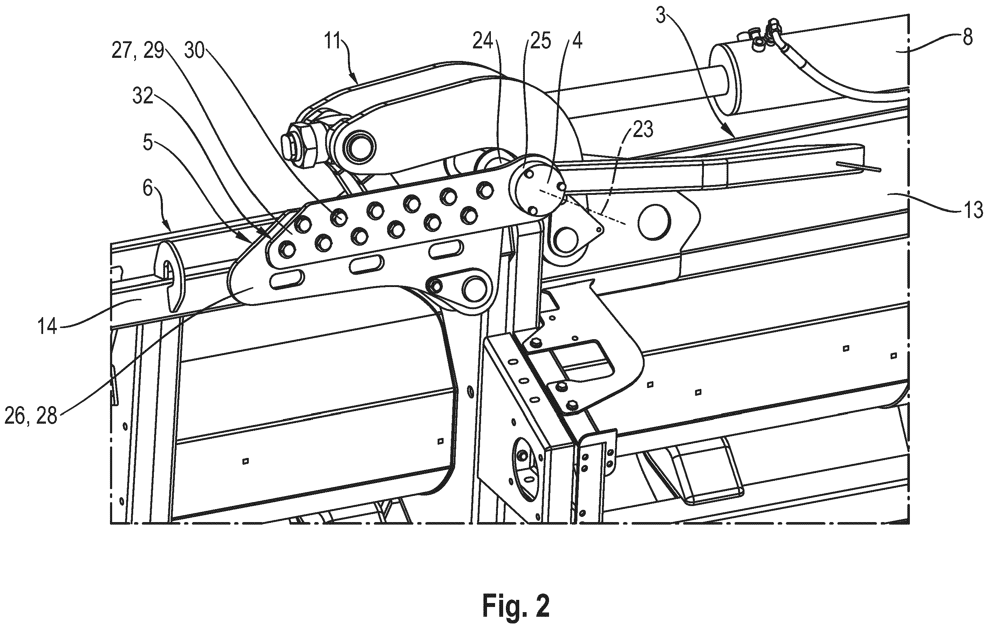

Fig. 2 zeigt perspektivisch und schematisch die Schwenklagerung 4, mittels derer das Mittensegment 3 mit dem Seitensegment 6 drehbeweglich miteinander gekoppelt sind. Die Schwenklagerung 4 bildet eine sich in Fahrtrichtung FR erstreckende Schwenkachse 23 aus, um die das Seitensegment 6 relativ zu dem Mittensegment 3 verschwenkbeweglich ist. Die Schwenklagerung 4 umfasst einen ortsfest an dem Mittelrahmenteil 13 angeordneten Bolzen 24. Der Bolzen 24 kann beispielsweise mit dem Mittelrahmenteil 13 verschweißt sein. Um eine Relativbewegung um die Schwenkachse 23 zu ermöglichen, ist ein als Gelenklager 25 ausgebildetes Lager 25 auf dem Bolzen 24 angeordnet, wobei die Schwenklagerhalterung 5 einends das Lager 25 haltert, bzw. umfasst und anderends an dem Seitenrahmenteil 14 angeordnet ist.

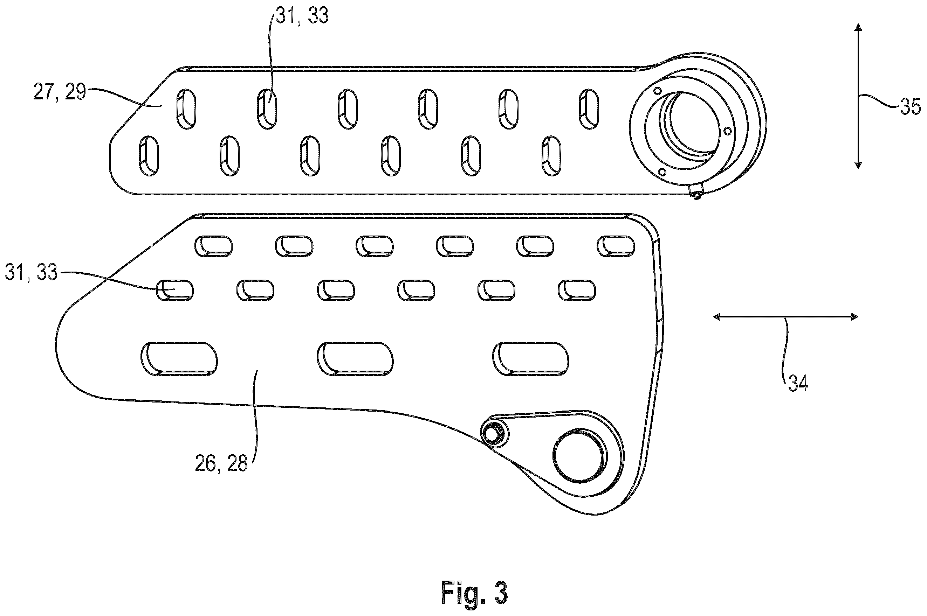

Die Schwenklagerhalterung 5 ist dazu vorgesehen und eingerichtet das Seitensegment 6 relativ zu dem Mittensegment 3 auszurichten. Hierfür umfasst die Schwenklagerhalterung 5 ein erstes Tragelement 26, das eine erste Flanschfläche 28 ausbildet, und ein zweites Tragelement 27, das eine zweite Flanschfläche 29 ausbildet. Das erste Tragelement 26 ist ortsfest an dem Seitenrahmenteil 14 und das zweite Tragelement 27 ist an der Schwenklagerung 4 angeordnet, wobei das zweite Tragelement 27 das Walzlager 25 radial außenseitig umfasst. Die Flanschflächen 28, 29 sind in Fig. 3 näher dargestellt. Die Tragelemente 26, 27 weisen miteinander korrespondierende Verbindungsbereiche 31 auf, die dazu vorgesehen und eingerichtet sind, jeweils mittels eines Verbindungsmittels 30 miteinander verbunden zu werden. Hier und vorzugsweise sind die Verbindungsmittel 30 als Schraubbolzen ausgebildet.

Das erste Tragelement 26 umfasst eine Mehrzahl von Verbindungsbereichen 31, die als Langlöcher 33 ausgebildet sind. Das zweite Tragelement 27 umfasst ebenfalls eine Mehrzahl von Verbindungsbereichen 31, die als Langlöcher 33 ausgebildet sind. Die Langlöcher 33 des ersten Tragelements 26 sind um 90 Grad verdreht zu den Langlöchern 33 des zweiten Tragelements 27 ausgerichtet. Demgemäß ermöglichen die Langlöcher 33 des ersten Tragelements 26 in einem Losezustand der Verbindungsmittel 30 eine Relativbewegung der Tragelemente 26, 27 entlang einer erste Bewegungsachse 34. Wobei sich die erste Bewegungsachse 34 in eine Längsrichtung der Langlöcher 33 des ersten Tragelements 26 erstreckt. Zugleich ermöglichen die Langlöcher 33 des zweiten Tragelements 27 in einem Losezustand der Verbindungsmittel 30 eine Relativbewegung der Tragelemente 26, 27 entlang einer zweiten Bewegungsachse 35, die sich in eine Längsrichtung der Langlöcher 33 des zweiten Tragelements 27 erstreckt. Die erste Bewegungsachse 34 ist orthogonal zur zweiten Bewegungsachse 35. Mithin sind die Tragelemente 26, 27 in einem Losezustand der Verbindungsmittel 30 relativ zueinander beweglich. Die Tragelemente 26, 27 verbinden das Seitensegment 6 mit der Schwenklagerung 4, sodass diese ein Ausrichten des Seitensegments 6 relativ zu dem Mittensegment 3 ermöglichen.

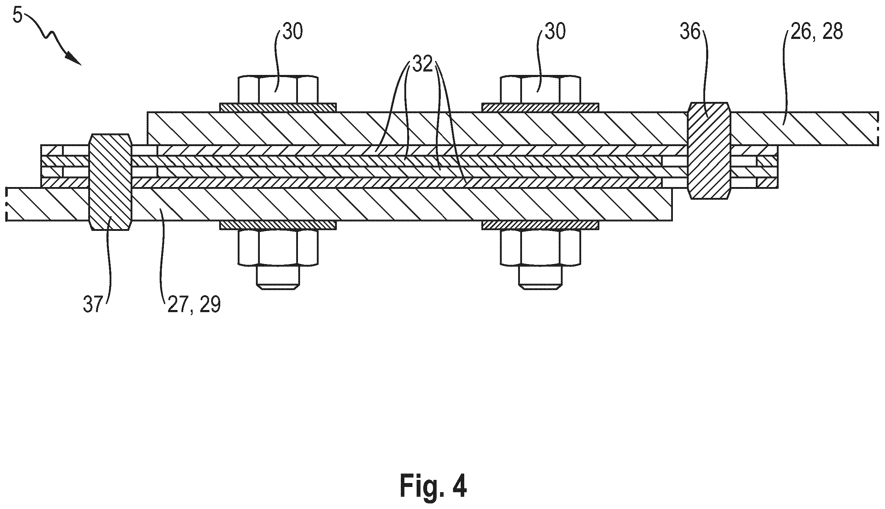

Wie Fig. 4 zeigt, sind zwischen den Tragelementen 26, 27 eine Mehrzahl von plattenförmigen Reibelementen 32 angeordnet. In einem Festzustand der Verbindungsmittel 30 sind die Reibelemente 32 zwischen den Tragelementen 26, 27 eingeklemmt. Zumindest ein Reibelement 32, vorzugsweise zwei Reibelemente 32, liegen flächig an den Flanschflächen 28, 29 an. Die Reibelemente 32 verbinden die Tragelemente 26, 27 in kraftübertragender Weise. Die Reibelemente 32 können aus verzinktem Stahl, Aluminium, Edelstahl oder gesintertem Metall bestehen. Die Reibelemente 32 bewirken, insbesondere im Festzustand der Verbindungsmittel 30, eine reibschlüssige Verbindung zwischen den Flanschflächen 28, 29 bzw. Tragelementen 26, 27. Die reibschlüssige Verbindung verhindert eine Relativbewegung der Flanschflächen 28, 29 zueinander. Hier und vorzugsweise verhindern die Reibelemente 32 eine Relativbewegung der Flanschflächen 28, 29 entlang der ersten und zweiten Bewegungsachse 34, 35.

In der in Fig. 4 dargestellten Ausführungsform sind vier Reibelemente 32 zwischen den Flanschflächen 28, 29 angeordnet. Hier und vorzugsweise sind zwei der Reibelemente 32 mittels eines als Bolzen ausgebildeten ersten Befestigungsmittels 36 mit dem ersten Tragelement 26 verbunden und zwei weitere Reibelemente 32 mittels eines zweiten als Bolzen ausgebildeten Befestigungsmittels 37 mit dem zweiten Tragelement 27 verbunden. Die Reibelemente 32 sind sandwichartig angeordnet. Sandwichartig ist im Sinne der vorliegenden Anmeldung derart zu verstehen, dass die mit dem ersten Tragelement 26 verbundenen Reibelemente 32 alternierend zu den mit dem zweiten Tragelement 27 verbundenen Reibelementen 32 angeordnet sind. Die Reibelemente 32 weisen jeweils mit den benachbarten Reibelementen 32 und/oder mit den benachbarten Flanschflächen 28, 29 eine flächige Kontaktfläche auf. Die Verwendung von mehreren Reibelementen 32 führt aufgrund der erhöhten Reibfläche zwischen den Tragelementen 26, 27 zu einer höheren Belastbarkeit der Schwenklagerhalterung 5, ohne dass die Tragelemente 26, 27 ihre Position relativ zueinander verändern. Die Befestigungsmittel 36, 37 bewirken zusätzlich, dass die Position der Reibelemente 32 im Festzustand der Verbindungsmittel 30 auch bei erhöhter Belastung der Schwenklagerhalterung 5 unverändert bleibt.

**Bezugszeichenliste:**

| | | | |
|---|---|---|---|
| 1 | Vorsatzgerät | 34 | Erste Bewegungsachse |
| 2 | Landwirtschaftliche Arbeitsmaschine | 35 | Zweite Bewegungsachse |
| 3 | Mittensegment | 36 | Erstes Befestigungsmittel |
| 4 | Schwenklagerung | 37 | Zweites Befestigungsmittel |
| 5 | Schwenklagerhalterung | | |
| 6 | Seitensegment | FR | Fahrtrichtung |
| 7 | Hubzylinder | | |
| 8 | Hubzylinder | | |
| 9 | Kolbenstangen | | |
| 10 | Kolbenstangen | | |
| 11 | Koppelmechanismus | | |
| 12 | Hauptrahmen | | |
| 13 | Mittelrahmenteil | | |
| 14 | Seitenrahmenteil | | |
| 15 | Pflückwalzen | | |
| 16 | Arbeitsorgane | | |
| 17 | Pflückspalt | | |
| 18 | Pflückplatten | | |
| 19 | Stängel | | |
| 20 | Fruchtstände | | |
| 21 | Förderketten | | |
| 22 | Querförderschnecke | | |
| 23 | Schwenkachse | | |
| 24 | Bolzen | | |
| 25 | Lager | | |
| 26 | Erstes Tragelement | | |
| 27 | Zweites Tragelement | | |
| 28 | Erste Flanschfläche | | |
| 29 | Zweite Flanschfläche | | |
| 30 | Verbindungsmittel | | |
| 31 | Verbindungsbereich | | |
| 32 | Reibelement | | |
| 33 | Langloch | | |

## Patentansprüche

1. Vorsatzgerät (1) für eine landwirtschaftliche Arbeitsmaschine (2) umfassend
- ein Mittensegment (3) mit einem Mittelrahmenteil (13)
- zumindest ein Seitensegment (6), mit einem Seitenrahmenteil (14) wobei das Seitensegment (6) mit einer Schwenklagerung (4) mit dem Mittensegment (3) gekoppelt ist, wobei die Schwenklagerung (4) eine Schwenkachse (23) ausbildet, um die das Seitensegment (6) relativ zu dem Mittensegment (3) verschwenkbeweglich ist,
wobei das Vorsatzgerät (1) eine Schwenklagerhalterung (5) umfasst, **dadurch gekennzeichnet, dass** die Schwenklagerhalterung (5) dazu vorgesehen und eingerichtet ist das zumindest eine Seitensegment (6) relativ zu dem Mittensegment (3) auszurichten,
wobei die Schwenklagerhaltung (5) zwei Tragelemente (26, 27) umfasst, die mittels zumindest eines Reibelements (32) in kraftübertragender Weise verbunden sind.

2. Vorsatzgerät (1) nach Anspruch 1, **dadurch gekennzeichnet, dass** das erste Tragelement (26) eine erste Flanschfläche (28) ausbildet und das zweite Tragelement (27) eine zweite Flanschfläche (29) ausbildet.

3. Vorsatzgerät (1) nach einem der Ansprüche 1 oder 2, **dadurch gekennzeichnet, dass** das erste Tragelement (26) ortsfest an dem Seitenrahmenteil (14) angeordnet ist und das zweite Tragelement (27) an der Schwenklagerung (4) angeordnet ist.

4. Vorsatzgerät (1) nach einem der Ansprüche 1 bis 3, **dadurch gekennzeichnet, dass** die Schwenklagerung (4) einen Bolzen (24) umfasst, der ortsfest an dem Mittelrahmenteil (13) angeordnet ist, wobei ein Lager (25), insbesondere Gelenklager (25), auf dem Bolzen (24) angeordnet ist, welches den Bolzen (24) mit dem zweiten Tragelement (27) drehbeweglich koppelt.

5. Vorsatzgerät (1) nach einem der Ansprüche 2 bis 4, **dadurch gekennzeichnet, dass** das Reibelement (32) eine flächige Platte ist, die zwischen der ersten und zweiten Flanschfläche (28, 29) angeordnet ist, wobei vorzugsweise das Reibelement (32) aus verzinktem Stahl, Aluminium, Edelstahl oder gesintertem Metall besteht.

6. Vorsatzgerät (1) nach einem der Ansprüche 2 bis 5, **dadurch gekennzeichnet, dass** mindestens zwei Reibelemente (32), vorzugsweise vier Reibelemente (32), zwischen der ersten und zweiten Flanschfläche (28, 29) sandwichartig angeordnet sind, wobei zumindest ein Reibelement (32) mittels eines ersten Befestigungsmittels (36), insbesondere eines Bolzens, an der ersten Flanschfläche (28) angeordnet ist und zumindest ein weiteres Reibelement (32) mittels eines zweiten Befestigungsmittels (37), insbesondere eines Bolzens, an der zweiten Flanschfläche (29) angeordnet ist.

7. Vorsatzgerät (1) nach einem der Ansprüche 1 bis 6, **dadurch gekennzeichnet, dass** die Tragelemente (26, 27) miteinander korrespondierende Verbindungsbereiche (31) aufweisen, die dazu vorgesehen und eingerichtet sind, jeweils mittels mindestens eines Verbindungsmittels (30) miteinander verbunden, insbesondere verschraubt, zu werden.

8. Vorsatzgerät (1) nach Anspruch 7, **dadurch gekennzeichnet, dass** das erste Tragelement (26) in seinen Verbindungsbereichen (31) derart ausgebildet ist, insbesondere mittels Langlöcher (33), dass bei Vorliegen der Verbindungsmittel (30) in einem Losezustand das erste Tragelement (26) entlang einer ersten Bewegungsachse (34) relativ zu dem zweiten Tragelement (27) beweglich ist.

9. Vorsatzgerät (1) nach einem der Ansprüche 7 bis 8, **dadurch gekennzeichnet, dass** das zweite Tragelement in seinen Verbindungsbereichen (31) derart ausgebildet ist, insbesondere mittels Langlöcher (33), dass bei Vorliegen der Verbindungsmittel (30) in einem Losezustand das erste Tragelement (26) entlang einer zweiten Bewegungsachse (35) relativ zu dem zweiten Tragelement (27) beweglich ist.

10. Vorsatzgerät (1) nach einem der Ansprüche 1 bis 9, **dadurch gekennzeichnet, dass** das Seitensegment (6) von einer horizontal ausgerichteten Arbeitsstellung in eine Transportstellung verschwenkbeweglich ist.

## Claims

1. Front Attachment (1) for an agricultural working machine (2), comprising
- a centre segment (3) with a central frame part (13)
- at least one side segment (6), with a side frame part (14)
wherein the side segment (6) is coupled to the centre segment (3) with a pivot bearing (4), wherein the pivot bearing (4) forms a pivot axis (23) around which the side segment (6) is pivotable relative to the centre segment (3),
wherein the front attachment (1) comprises a pivot bearing holder (5), **characterized in that** the pivot bearing holder (5) is provided and designed to align the at least one side segment (6) relative to the centre segment (3),
wherein the pivot bearing holder (5) comprises two supporting elements (26, 27), which are connected in a force-transmitting manner by means of at least one friction element (32).

2. Front Attachment (1) according to Claim 1, **characterized in that** the first supporting element (26) forms a first flange surface (28) and the second supporting element (27) forms a second flange surface (29).

3. Front Attachment (1) according to either of Claims 1 and 2, **characterized in that** the first supporting element (26) is arranged in a positionally fixed manner on the side frame part (14) and the second supporting element (27) is arranged on the pivot bearing (4).

4. Front Attachment (1) according to any one of Claims 1 to 3, **characterized in that** the pivot bearing (4) comprises a bolt (24) which is arranged in a positionally fixed manner on the central frame part (13), wherein a bearing (25), in particular spherical plain bearing (25), is arranged on the bolt (24), which rotationally couples the bolt (24) to the second supporting element (27).

5. Front Attachment (1) according to any one of Claims 2 to 4, **characterized in that** the friction element (32) is a flat plate which is arranged between the first and second flange surfaces (28, 29), wherein, preferably, the friction element (32) is composed of galvanized steel, aluminium, stainless steel or sintered metal.

6. Front Attachment (1) according to any one of Claims 2 to 5, **characterized in that** at least two friction elements (32), preferably four friction elements (32), are arranged in a sandwich-like manner between the first and second flange surfaces (28, 29), wherein at least one friction element (32) is arranged on the first flange surface (28) by means of a first fastening means (36), in particular a bolt, and at least one further friction element (32) is arranged on the second flange surface (29) by means of a second fastening means (37), in particular a bolt.

7. Front Attachment (1) according to any one of Claims 1 to 6, **characterized in that** the supporting elements (26, 27) have mutually corresponding connecting regions (31), which are provided and designed to be connected, in particular screwed, to one another in each case by means of at least one connecting means (30).

8. Front Attachment (1) according to Claim 7, **characterized in that** the first supporting element (26) is formed in its connecting regions (31), in particular by means of elongated holes (33), in such a way that, when the connecting means (30) are in a release state, the first supporting element (26) is movable along a first movement axis (34) relative to the second supporting element (27).

9. Front Attachment (1) according to any one of Claims 7 to 8, **characterized in that** the second supporting element is formed in its connecting regions (31), in particular by means of elongated holes (33), in such a way that, when the connecting means (30) are in a release state, the first supporting element (26) is movable along a second movement axis (35) relative to the second supporting element (27).

10. Front Attachment (1) according to any one of Claims 1 to 9, **characterized in that** the side segment (6) is pivotable from a horizontally aligned working position into a transport position.

## Revendications

1. Appareil accessoire (1) pour une machine de travail agricole (2) comprenant
- un segment central (3) avec une partie centrale de cadre (13),
- au moins un segment latéral (6) avec une partie latérale de cadre (14),
le segment latéral (6) étant couplé au segment central (3) par un palier de pivotement (4), le palier de pivotement (4) formant un axe de pivotement (23), autour duquel le segment latéral (6) est mobile par pivotement par rapport au segment central (3),
l'appareil accessoire (1) comprenant un support de palier de pivotement (5), **caractérisé en ce que** le support de palier de pivotement (5) est prévu et mis au point pour orienter l'au moins un segment latéral (6) par rapport au segment central (3),
le support de palier de pivotement (5) comprenant deux éléments porteurs (26, 27), qui sont reliés avec transmission de force au moyen d'au moins un élément de friction (32).

2. Appareil accessoire (1) selon la revendication 1, **caractérisé en ce que** le premier élément porteur (26) forme une première surface de bride (28) et le second élément porteur (27) forme une seconde surface de bride (29).

3. Appareil accessoire (1) selon l'une des revendications 1 ou 2, **caractérisé en ce que** le premier élément porteur (26) est disposé de manière fixe sur la partie latérale de cadre (14) et le second élément porteur (27) est disposé sur le palier de pivotement (4).

4. Appareil accessoire (1) selon l'une des revendications 1 à 3, **caractérisé en ce que** le palier de pivotement (4) comprend un boulon (24), qui est disposé de manière fixe sur la partie centrale de cadre (13), un palier (25), en particulier un palier articulé (25), étant disposé sur le boulon (24), lequel couple de manière mobile en rotation le boulon (24) au second élément porteur (27).

5. Appareil accessoire (1) selon l'une des revendications 2 à 4, **caractérisé en ce que** l'élément de friction (32) est une plaque plate, qui est disposée entre la première et la deuxième surface de bride (28, 29), l'élément de friction (32) étant de préférence constitué d'acier galvanisé, d'aluminium, d'acier inoxydable ou de métal fritté.

6. Appareil accessoire (1) selon l'une des revendications 2 à 5, **caractérisé en ce qu'**au moins deux éléments de friction (32), de préférence quatre éléments de friction (32), sont disposés en sandwich entre la première et la deuxième surface de bride (28, 29), au moins un élément de friction (32) étant disposé au moyen d'un premier moyen de fixation (36), en particulier d'un boulon, sur la première surface de bride (28) et au moins un autre élément de friction (32) étant disposé sur la seconde surface de bride (29) au moyen d'un deuxième moyen de fixation (37), en particulier d'un boulon.

7. Appareil accessoire (1) selon l'une des revendications 1 à 6, **caractérisé en ce que** les éléments porteurs (26, 27) comportent des zones de liaison (31) correspondant entre elles, qui sont prévues et mises au point pour être reliées entre elles, en particulier vissées, respectivement au moyen d'au moins un moyen de liaison (30).

8. Appareil accessoire (1) selon la revendication 7, **caractérisé en ce que** le premier élément porteur (26) est formé dans ses zones de liaison (31) de telle manière, en particulier au moyen de trous oblongs (33), qu'en présence des moyens de liaison (30) dans un état lâche, le premier élément porteur (26) est mobile le long d'un premier axe de déplacement (34) par rapport au second élément porteur (27).

9. Appareil accessoire (1) selon l'une des revendications 7 à 8, **caractérisé en ce que** le second élément porteur est formé dans ses zones de liaison (31) de telle manière, en particulier au moyen de trous oblongs (33), qu'en présence des moyens de liaison (30) dans un état lâche, le premier élément porteur (26) est mobile le long d'un deuxième axe de déplacement (35) par rapport au second élément porteur (27).

10. Appareil accessoire (1) selon l'une des revendications 1 à 9, **caractérisé en ce que** le segment latéral (6) est mobile par pivotement d'une position de travail orientée horizontalement dans une position de transport.
